# EUROPEAN PATENT SPECIFICATION

(11) **EP 1 975 089 B1**
(45) Date of publication and mention of the grant of the patent: **26.01.2011**
(21) Application number: 08005745.8
(22) Date of filing: 27.03.2008
(51) Int. Cl.: B65G 1/00, B65G 1/137, A01G 9/14

(54) **Process for the treatment of a danish container**
Verfahren zur Behandlung eines dänischen Behälters
Processus pour le traitement d'un conteneur danois

(30) Priority: 29.03.2007 NL 1033615
(43) Date of publication of application: 01.10.2008
(73) Proprietor: Waterdrinker Aalsmeer B.V., 1430 BE Aalsmeer (NL)
(72) Inventor: de Jong, Martin Adam, 3295 LB 's-Gravendeel (NL); Ijpelaar, Bob, 3089 SN Rotterdam (NL)
(74) Representative: Bleukx, Lucas Lodewijk M.

(56) References cited:
- EP-A- 1 186 265
- EP-A- 1 600 327
- WO-A-03/081987
- WO-A-2006/018434
- JP-A- 2004 149 289

## Description

The invention relates to a process for the treatment of a Danish container comprising a support, poles and plates, in which a Danish container charged with a first assortment of products is supplied to a treatment station, and a Danish container charged with a second assortment of products is removed from the treatment station, as is stated in the preample of claim 1 and a system for performing this process as stated in the preamble of claim 13.

The use of Danish containers in the logistics of flowers, plants or fusts (a fust is a tray having a number of recesses in which plants or flowers are placed) or any other charge is widespread and commonly known. In this known process for treatment the supplied Danish containers are partly or completely discharged by transferring the charge to another Danish container, the charge being redistributed during this transfer. As soon as a Danish container is partly or completely empty, this container is reused of disassembled in its components,-a support, poles and plates which are subsequently stored.

In practice this is a time consuming process involving much man power. It has been found that in a great number of situations a new Danish container which must be composed contains plates filled with products which have been supplied as such together with a supplied Danish container, which has been discharged upon arrival.

In WO 2006/018434 there is described an apparatus and a method for dismantling shelving units, such as Danish containers according to the preamble of claims 13 and 1 respectively. According to this publication an empty container is disassembled into its components, whereby the empty shelves are put on a stock for temporarily deposit, until a new empty container must be assembled.
The known apparatus and method is not suitable for the disassembling of loaded containers, temporarily storage of loaded shelves and re-assembling a new container, in that no suitable intermediate storage has been provided.
In JP-A-2004149289 there is described a system for transforming flower or ornamental plant bundles from a conveyor to a movable cart, such as e.g. a Danish container. In fact this deals with the problem of loading a container, but does mention the assembling or disassembling of the container itself.

It is an object of the invention to provide a process in which the superfluous discharging and loading of the plates of a Danish container is avoided in a substation way, whereby the whole progress of the logistic system can become a substantially automatic system.

This object is achieved according to the invention described by the process as stated in the appended claim 1 and by the system for performing the process as stated in the appended claim 13. By means of this process it is obtained that the plates loaded with products as supplied are maintained as much as possible and the products are not needless transferred to another plate thereby reducing the required manpower.

Other characteristics and advantages of the invention will become clear form the following description, reference being made to the annexed drawings. In the drawings is:
Fig. 1 a perspective view of a Danish container loaded with products,
Fig. 2 a perspective exploded view of a Danish container,
Fig. 3 a schematic representation of a logistic system in which the process according to the invention can be applied,
Fig. 4 a cross section view of the schematic representation of Fig. 3,
Fig. 5 a schematic representation of a system for lifting the plates of a Danish container,
Fig. 6 a perspective view of a Danish container with a representation of a system for separating the poles from the plates,
Fig. 7 a perspective view of a system for aligning the pens of a stack of plates,
Figs. 8 and 9 a schematic representation of a system for aligning the pens of the plates,
Figs. 10 and 11 a schematic representation of the progress during the assembling of the poles and the plates,
Fig. 12 a perspective view of a first embodiment of a system for guiding the poles in the openings of the support,
Fig. 13 a perspective view of a second embodiment of a system for guiding the poles according to Fig. 12, and
Fig. 14 a schematic view of a system for maintaining the plates at the right height during the assembling of a Danish container.

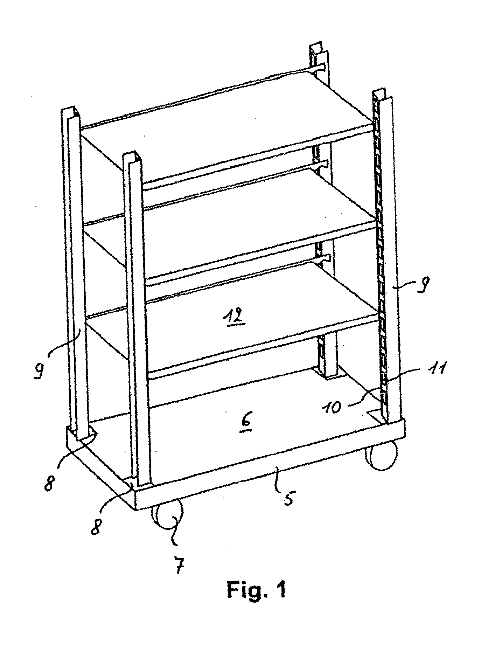

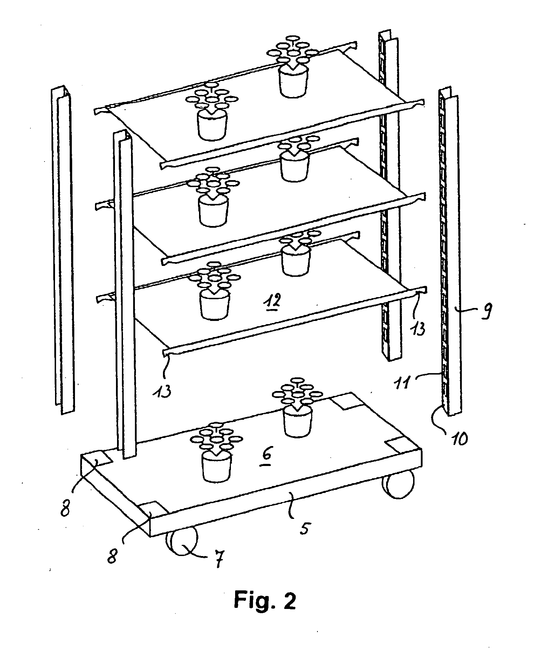

In the figures 1 and 2 there is shown a so-called Danish container such as it is generally in use in the logistics of flowers, plants and fusts and related products, and as is described in more detail in the Danish patent application 2000 01179. The Danish container has a support 5 comprising a rectangular base plate 6 which is mounted on rollers 7, which can be in the shape of castors. In each corner of the base plate 6 there is provide an opening 8 in the shape of a tube for accommodating the under end of a pole 9. each pole 9 has in principle a U-shaped cross-section, in which the body plate 10 of the U-shaped profile forming the pole is parallel to the short side edge of the base plate 6. In normal use of the Danish container the poles 9 are positioned such that the body plates 10 are turned inwardly. In the body plates 10 a number of longitudinal openings 11 has been provided, which openings 11 are regularly spaced along the length of the pole 9, the distance between two adjacent openings having a constant value and will called hereinafter the pitch. The biggest dimension of each opening 11 is oriented according to the length of the pole 9, the opening having substantially a rectangular shape.

In the openings 11 a number of rectangular plates 12 can be positioned one above the other the distance between each pair of adjacent plates 12 or between the ground plate 6 and the first plate 12 above it being freely selectable, taking into account the pitch between the openings 11 in the poles 9. In view thereof the longitudinal sides of the plates 12 are extended at both sides by means of a pen 13 which can have the shape of a hook by means of which each pen 13 can be accepted by an opening 11.

It might be obvious that the invention is not restricted to the Danish container as such, where defined dimensions and standards are applicable, but the invention can also be applied to other types of containers, cars or racks in which plates are positioned between poles which are carried by a support in the same way as described above. The expression Danish container also relates to this type of containers and the description and claims are to be read like that.

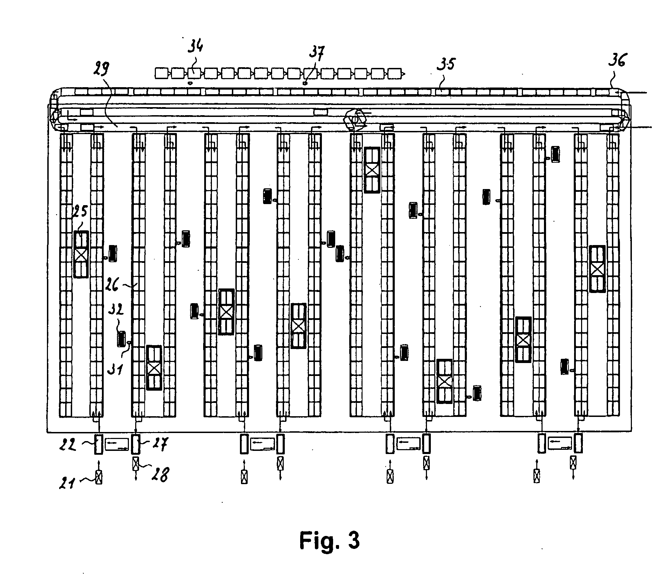

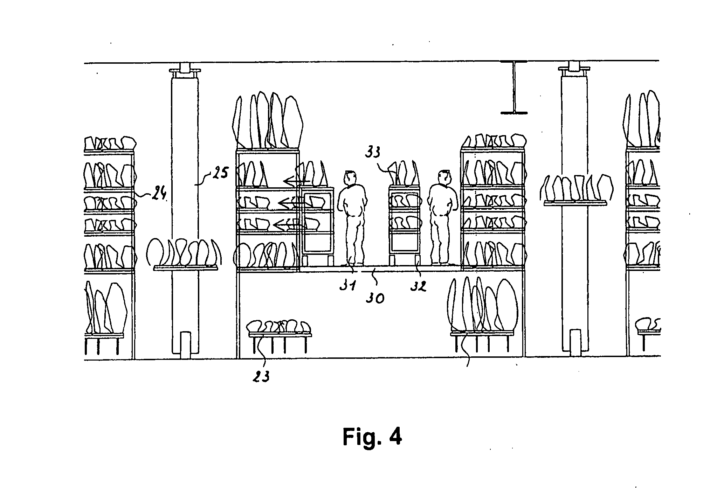

In order to better understand the system and the process according to the invention, the logistic system in which the process can be applied is described now. For this it is accepted that there is a situation in which the plant or flower cultivator or gardener has filled a number of Danish container with flowers, plants, fusts or other products and will deliver the same to a central unit, for example in the neighborhood of an auction, and the Danish containers which a charge of flowers, plants, fusts or other products are prepared for delivery to a customer. As a rule the assortment of products present on a Danish container to be delivered will be different from the assortment of products present on any of the supplied Danish containers. For this reference is made to figures 3 and 4.

The Danish containers 21 as supplied by the cultivators are transported by hand or through a mechanical buffer to the device for the treatment of the containers. The first part of the device comprises a mechanical system 22 which lifts the poles from the support, whereupon the support either supported by a carrier or not is moved along a transport track 23. In a possible embodiment the plates are lifted such that the poles are lifted from the support. In this embodiment cams - having teeth at the right pitch - are moved along each pole under the plates and are lifted upwardly in a combined movement with respect to the support. When the teeth of the cams are connected to chains, the plates can be moved downwardly in a controlled manner, whereby the plates one by one can be moved along a transport track, either provided with a carrier or not. In this way the complete Danish container is mechanically converted to individually displaceable layers of plants or products. A substantial part of the layers with plants is displaced as a whole layer. By introducing these plates with supports in a sorting system the plates can be grouped per customer or subcontractor of a customer.

A possible embodiment for such a sorting system comprises an arrangement in which two parallel transport tracks above which static buffer positions in the shape of storage scaffoldings 24 form a buffer area for the plates. The transport of the plates between the transport tracks and the static buffer positions is in this situation provided for by a lifting device 25 which can receive one or more plates at a time which after a vertical or horizontal movements are placed in the right position.

One of the transport tracks 23 constitutes the output track of the installation where the Danish containers are disassembled. By means of the lifting device mentioned before the plates corresponding to the combination required for a Danish container to be delivered are collected from the different buffer positions and collected on the other transport track 26.

In the extended part of this transport track there is provided for an installation 27 which starting from the individual plates and support is building up a new Danish container 28. This installation moves the plates above each other at the right level with respect to each other. By maintaining the plates at the right level by means of cams comparable to the cams as used during the disassembling, the four poles can be added, whereupon the unit with the four poles can be lowered in the support. In this way the containers are build up again and ready to be dispatched.

The complete installation can be shaped in a modular way with different combinations of a disassembling installation, a buffer for the plates and a building up installation. In order to make it possible to have an interaction between these combinations, the transport tracks are connected to a closed transport track 29. In this way it becomes possible to transport plates from one buffer zone to another buffer zone. For some part of the delivered containers, the plates are transported as a whole to a customer or a representative of a customer. Fusts with plants originating from more than one plate must be collected in order to make so-called mixed plates.

In order to have this done in an efficient way the buffer scaffoldings are spaced from each other so far that a platform 30 can be provided with sufficient possibilities for movement for the fellow-workers 31 handling the Danish containers 32 which are ready for dispatch. From the rear side of the scaffolding the fellow-workers can pick up fusts from the plates resting in the scaffolding and position the same on plates 33 which are located in Danish containers which are destined to be dispatched. In order to avoid mistakes and reduce the search time this process can be supported for example by a pick to light system. When the mixed plates for the customer are complete, the fellow worker moves the Danish container which is prepared for delivery to the rear side of the scaffolding, and subsequently the mixed plates are shifted into the scaffolding. These plates are then available for composing a new container.

As a result of the great diversity of tart and size of the plants, a part of the assortment is not suited for mechanical handling. For these plants there is provided a space in the installation with the required height in a container to be composed and in that container an empty plate in the right position will be reserved. Fellow workers will position afterwards the plants in the reserved position.

The installation also has a possibility to handle fusts and loose plants which are supplied for example by means of auction containers 34. For that purpose empty plates 35 are moved along a transport track 36 where fellow workers 37 can position the fusts and loose plants on the right plate. If needed also this partial activity can be supported by a pick to light system.

In order to make it possible to integrate this activity with other handling activities the installation provides the possibility to exchange plate loaded with product with other handling locations. For the handling activities this offers the advantage that the product is supplied in an ergonomic manner.

The handling of the Danish containers according to the invention requires a number of operations or steps which will now be described separately in more detail indicating at the same time how these operations or steps can be performed in practice.

In a first step the entity comprising the plates 12 and the poles 10 must be separated from the support 5. As indicated before this can be obtained by engagement of a hook or cam under the pens 13 of each plate 12, whereupon subsequently all hooks or cams are moved as a unit with respect to the support in a direction which is substantially perpendicular with respect to the surface of the plates 12. Before this happens it might be desirable that the complete container
Is positioned on top of a supporting member, the support 5 remaining with this member after the entity of plates 12 and poles 10 has been removed, whereupon the support by means of this support member can be removed to the right destination in the buffer storage.

The hooks or cams which serve to move the plates 12 through the pens 13 can operate according to different principles.

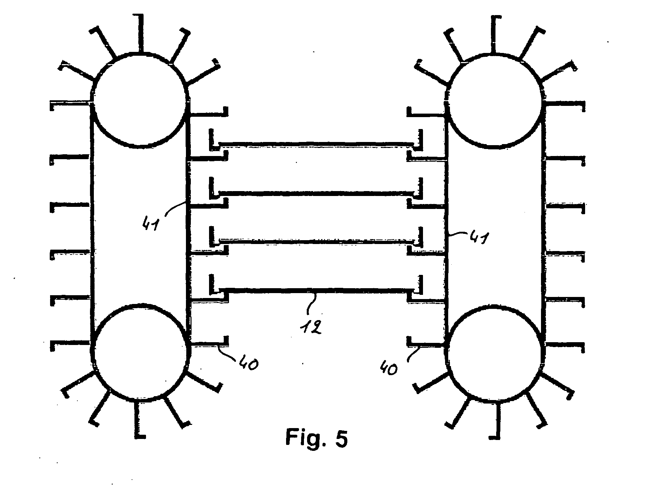

In a first embodiment a number of hooks or cams 40 are mounted on an endless chain 41, see Figure 5, in such a way that the distance between each pair of subsequent hooks or cams 40 is equal to the pitch of the openings 11 in the poles 10. When in each corner of the Danish container under each collection of pens 13 which are vertically on top of each other a chain 41 with hooks or cams is inserted, it is obtained that when the chain 41 is driven each of the plates 12 present in the Danish container is following this movement. If it is accepted that the poles 10 fit into the openings 8 with a defined tolerance, this may be sufficient to separate the plates 12 with the poles 10 from the support. If needed the support may be withheld by means of any holding member well known in the art, for example a hook pressing on the plate 6 during the movement of the chains. If it is found that the poles 10 as a result of deformation, contamination or change of measures are stuck firmly in the openings 8, than it is possible to select a system in which the support is temporarily moved together with the upward movement of the plates 12 and poles 9, and that subsequently an impact or the like is given to the support 5 in order to loose it from the poles. If needed the impact may be replaced by pulling means which pull the support with sufficient force from the poles 9.

In a modified embodiment the hooks or cams 40 are attached to the chain 41 the distance between two adjacent hooks or cams 40 being equal to the pitch, but the hooks or cams are movable between two positions, an active position in which the hook or cam 40 is extending under a pen 13, and a rest position in which the hook or cam 40 is withdrawn outside of the circumference of the Danish container. This can for example been obtained by means of hooks or cams which rotatable of slidable connected to the chain 41. This embodiment requires detection means which identify the height on which the plates are positioned within the Danish container, which detection means are coupled to an actuation member which for example is located at the under end of the upwardly moving part of the chain 41 en which each time brings the right hook or cam 40 in the active position as this is passing along that point. As seen along the direction of movement of the chain this requires that before the actuating member there is provided a device which brings all the hooks or cams 40 back into the non active position. It also requires that both positions of the hooks or cams are stable positions.

In a modified embodiment there is an actuating mechanism provided behind the upwardly moving part of the chain, which activates these hooks or cams which need to pick up a pen of a detected plate during the further movement of the chain. This requires an actuation per pitch length such that the hook or cam remains activated during the upward movement.

In still another embodiment the hooks or cams are individually adjustable in height dependent upon the detected position of the plates. For each detected plate a hook or cam is brought to the right height for example because each hook or cam is connected to an individual lifting device. The possibilities here are for example a screw axis and a hook or cam mounted thereto, whereby the hook or cam is brought to the right height by rotation of the screw axis. When all the hooks or cams have been adjusted to the right height, all hooks and cams are moved in the direction of the Danish container whereby the hooks and cams are inserted under the pens 13. Subsequently all hooks and cams are moved upwardly as one unit.

In the handling device there is provided a frame in which all the systems for gripping the corners sections of the Danish container and the lifting of the plates are mounted such that by one movement of this frame the poles together with the plates are moved upwardly as one unit. It is however also possible to have all the systems which are gripping the pens in the different corner sections made as separate movable and controllable units, for example by means of step motors which move the cams or hooks individually upwardly or downwardly. This latter embodiment can be advantageous if deviations occur in the height of the plate in the different corner sections. This can happen in that a pole is not sufficiently inserted in the opening 8, in that an opening 11 is deformed or damages or in that one or two pens 13 of a plate are positioned one pitch too high or too low with respect to the pens at the opposite side. Individual displacement of the systems in the four corner sections provides the possibility to correct this deviation.

By the upward movement of the plates 12 also the poles 9 are lifted. In the ideal situation first the pens 13 will be lifted in the openings 11 until the upper edge of the pens touches the upper edges of the openings 11, whereupon the poles will be lifted with the pens. As a result of this it is obtained that the hook like recess in the pens 13 is not catching the lower edge of the openings 11.

In a next phase of the treatment of the Danish container the poles 9 must be separated from the plates 12.

First of all it must be remarked that in practice the poles 9 are frequently provided with extensions for providing a greater length to the poles 9. These extensions may have different functions. It is possible to use extensions which in principle have the same cross section and construction as the poles 9 and in such extensions additional plates 12 can be mounted. This is simply an extension of the height of the Danish container in order to increase its capacity. In other situations extensions of different constructions are used such as for example elongated pieces of wood or plastic. This type of extensions is mainly used when the upper plate is loaded with plants or flowers with a greater height and the Danish container is packed by means of a film wrapped around the container whereby the extensions are only used to avoid the contact between the film en the load on the upper plate.

In case the extensions are only there to support the packing material and for supporting additional plates, these extensions can already be removed at a moment that the poles 9 are not yet separated from the plates 12. This requires however that it is detected whether plates are present above the standard level of the Danish container.

In practice it is easier to separate the poles and if present together with the extensions form the plates en subsequently to remove the extensions from the poles, as this results in a more uniform treatment of the Danish container. This is important because apart from the variation in the art of the extensions also the length of the extensions can vary, which increases the complexity of the handling.

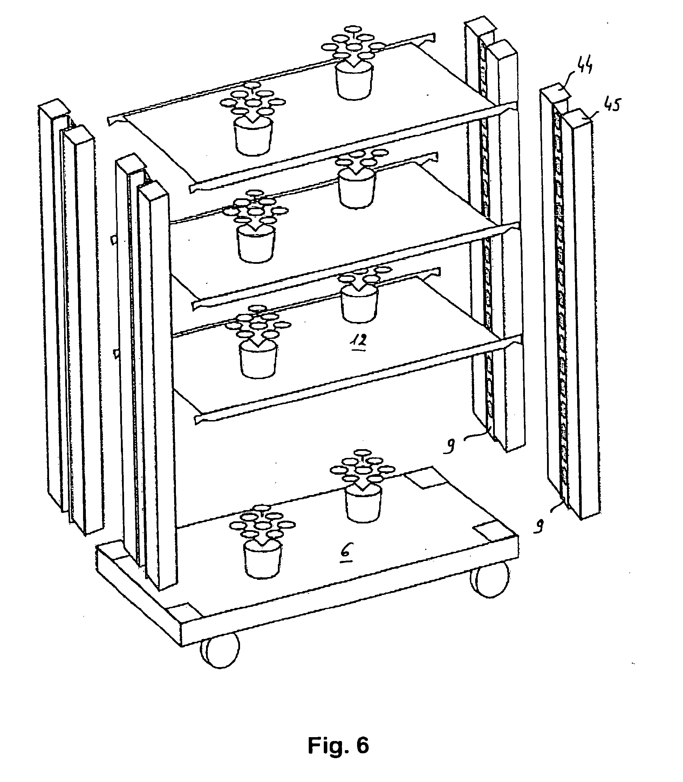

In order to separate the poles 9 from the plates 12 use can be made of a system as schematically shown in figure 6. It is accepted that the starting situation is such that the unit comprising the poles 9 and the plates 12 is still supported by the hooks or the cams 40. As explained above the poles 9 can be easily separated from the plates by a movement perpendicular to the body flanges of the poles 9, but this only in the ideal situation. As the device for lifting the plates is operating from the longitudinal edge of the plates 12, the poles can be approached by the short edges of the plates 12.

In the embodiment schematically shown in figure 6 each pole 9 is therefore clamped between two clamping bars 44, 45 which are connected to a mechanism which allows on the one side that the clamping bars 44, 45 relating to the same pole are pressed together so as to grip the pole 9 with a predetermined gripping force, and which subsequently has the possibility to remove the pole 9 together with the clamping bars 44 and 45 from the plates 12 in a direction perpendicular to the body flange of the poles 9 or in the longitudinal direction of the plates 12.
In the ideal situation the pens 13 of the plates 12 are free movable in the openings 11 of the poles. In practice the pens 13 and the openings 11 are often deformed, for example because the pens 13 are bent or the poles 9 are twisted. In these situations the poles cannot simply be removed from the plates, but a defined force is required between the plates 12 and the poles 9. Instead of claming bars use can be made of separate clamping organs, one pair of clamping organs being used per pole, such that each pole is gripped on two points. If needed also more that two clamping organs per pole may be present.

The required force can be obtained in that the poles of both sides from the Danish container are removed simultaneously from the plates. Due to the fact that the forces required at the first end may be substantially different from the forces needed at the other end this is not always a good solution. Therefore it may be necessary that the plates are held separately with respect to the clamping bars 44, 45. This can be obtained by an adequate construction of the hooks or cams 40 which make a movement of the plates in the longitudinal direction impossible. However it is also possible to use a holding member in the shape of a profile which lies against the shorter edges of the plates 12 at both sides thereof and which holds the plates 12 when the clamping bars 44, 45 are moved. It is also possible to use magnetic forces to keep the plates 12 at their position.

In another embodiment of the invention a vertical profile is pressed the end portions of the superimposed pens, which intercepts so to say in the open area of the U-shaped profile forming the pole, and this happens after the poles together with the plates have been lifted and the poles are in some way or another clamped. When subsequently the poles through the clamping organs are moved in the right direction, the pens are almost automatically removed from the openings. This movement is automatically limited in that the profile comes into contact with the body flange of the U-shaped profile forming the pole. When subsequently the profiles are removed, the poles can be easily removed from the pens.

As soon as the poles 9 are separated from the plates 12, it is possible to check whether extensions are present. If extensions are present they are removed, sorted according to type, controlled whether they can be used again and if so transferred to a buffer storage for this type of extensions. The unusable extensions are removed. The remaining poles basically all have the standardized dimensions of the poles of a Danish container. These poles can for instance through a monorail system being transported to an intermediate storage for poles.
During this transport the quality of the pole can be measured if needed, and rejected poles are either transferred to a repair shop or are transferred to a scrap unit.

All the above mentioned operations with of the poles can take place while the pole is still between the clamping bars. The clamping bars can also be used advantageously during the transfer of the poles to the monorail system, where the operations mentioned above can take place as well.

After the poles are thus separated from the plates and the support, the plates 12 remain as a stack of plates which are supported by the hook or cams 40. In the next step of the treatment of the Danish container these plates must be separated from each other. It must be noted that during the separation of the plates 12 and the poles 9 the support 5 can already been removed. Preferably this takes place in that the support is placed upon a carrier by means of which the support is transferred to the storage made for that purpose.

For the further separation of the plates a next carrier is placed under the stack of plates, and subsequently the stack is lowered over a defined height, which height corresponds to the distance between the plate 6 of the support 5 and the lowermost plate 12 in the supplied Danish container. This is simply to do by a movement of the chains 41 in an opposite direction whereby the plate is automatically released by the hook or cam 40 and will rest upon the carrier. As soon the carrier is also removed, it is transferred to the right position in the storage. In the mean time the next plate can be lowered on a following supplied carrier, and this process can be repeated until all plates are transferred to the storage. Now a next Danish container can be supplied.

In the above description it is accepted that the plates are separated by a downwardly movement. It may however be advantageous to transfer the plates on top of the carriers on a higher level, as in this way a better use of the available space can be made, thereby improving the total logistic system. This can be done by using chains with a greater length and extending over a greater height, whereby the plates can be moved further upwardly and on a defined level the plates can be removed by means of gripping elements from the hooks or cams and transferred to a carrier.

Before the plates loaded with products are stored in the storage it may be necessary to check the quality of the plates whereby it can be avoided that plates having certain defects are delivered. This is also an advantage when later in the process the Danish containers must be assembled. The smaller the defects are of the different components of such a container, the easier will be the assembling. More particularly it is possible to take care about the linearity of the pens 13. Oblique, curved or twisted pens can as a rule simply be corrected by means of an aligning machine which brings the pens back to the desired shape.

Other defects of the plate are not so easy to correct, but a plate having such defects which are not easily to correct can be separated from the main flow in the direction of the storage. One can think of transferring the products on such plates to plates performing the required quality standards. In practice it has been found that a plate, once it is made empty can be repaired by other means. Defects leading to a rejection of a plate are crack failures which are difficult or impossible to correct.

After in this way the Danish container is separated in its components and the plates with their products together with the corresponding support with its products are stored in the storage, the next step in the process is the assembling of Danish containers filled with products according to the wish of the client. This means the assembling of a new Danish container.

In the first place the plates with products and a support with products must be selected in the storage. When no support with the right composition of products is available, this must be made by charging a support with the right mix of products. The same applies when one or more plates loaded with the right products are not available. Also in this case empty plates must be provided with the requested mix of products. As soon a support and plates with the right mix of products are available the assembling of a new Danish container can start. Thereby the carrier of each plate or support is provided with an identification code which allows to define the free height to be available above the plate or support so that the next plate immediately above this one will no damage the products on the lower plate. Here it is accepted that each plate together with its carrier is stored in such a way in the intermediate storage that the identification codes is provided on the carrier. It is however also possible to store the plate without carrier in the intermediate storage. In this case the identification code is provided on the plate or the support or the control system keeps track of the position of each plate and which type of products is loaded on the plate.

In order to assemble of a Danish container carrying an assortment of products in accordance with the wish for example of a client, the process as described with respect to the disassembling of the container can in principle be followed in reversed sequence. In a first phase the selected plates loaded with products must be assembled into a stack of superimposed plates with the right distance between each pair of adjacent plates. Subsequently the four poles are moved over the pens of the plates whereupon the unit comprising the poles and the plates are put on top of the selected support whereby the poles are sliding into the openings. Simultaneously with this movement the plates can be lowered with respect to the poles whereby the hooks of the pens are clamped in the openings of the poles.

In order to assemble the selected plates into a stack of plates which are separated from each other by the right distances, use can be made of the same system as shown in figure 5, comprising four chains provided with hooks or cams which are positioned in such a way that the hooks or cams are engaging almost simultaneously the four pens of one and the same plate. By way of example the upper plate of a new Danish container to be built can be supplied through a carrier to the system of the four chains. When the plates is in the right position with respect to the hooks or cams 40, the chains 41 are driven such that the hooks or cams 40 directed towards the plate are moving upwardly over a distance which corresponds to the space which must kept free in view of the products loaded on the plate which must be positioned immediately below this plate. The distance will always be expressed as a whole number of pitches.

Subsequently the second plate as viewed from the top is supplied through a carrier and this plate is also lifted upwardly though driving of the chains. This process is repeated until all the plates of the Danish container to be built are located on the hooks or cams of the chains. It is thereby an object that a situation is obtained in which the lowermost plate is moved upwardly over a distance corresponding with the products loaded on the support to be supplied, which distance is also expressed as a whole number of pitches.

It is also obvious in this case that different systems consisting of hooks or cams can be used such as described with respect to the disassembling of the Danish container. In this way each chain can carry a number of hooks or cams the distance between each pair of adjacent hooks or cams being equal to one pitch. Otherwise it is also possible to make the hooks or cams such that they can be activated and it is also possible to have individual lifting devices per plate which lift each of the supplied plates to the right height. Further it must be remarked that it is not always possible to obtain a Danish container with an optimal degree of the load. In such a case it can happen that a plate is positioned on a height in the stack in which the free available space above that plate is not necessary for the load on that plate.

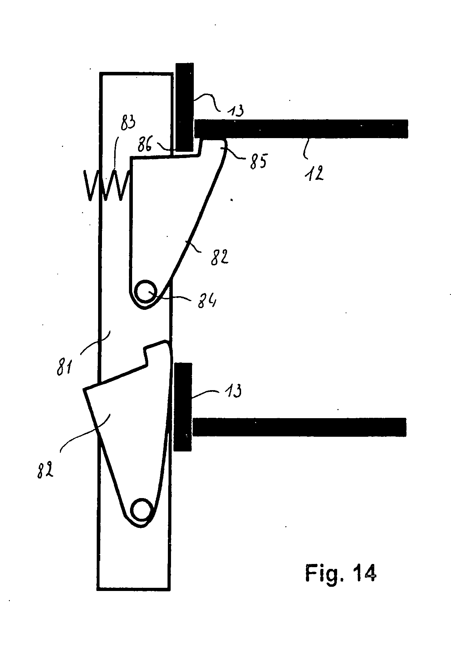

In figure 14 there is shown an embodiment of a device for positioning the plates on the right height. Each supplied plate 12 is in this device supported by the four pens 13, each of which being connected to a lifting device, not shown, in which each cam is moving upwardly along a vertically positioned rod 81. In each rod 81 a number of support members 82 has been provided comprising a cam 80 which by means of a spring 83 or gravity force is urged in the track of movement of the corresponding pen 13, the cam 82 being rotatably mounted around an axis 84 whereby the cam 82 can be turned into or out of the track of movement of the pen 13. The distance between each pair of adjacent cams 82 is equal to the pitch of the Danish container. In the embodiment shown the upper side of each cam 82 is provided with a small edge 85 whereby the cam 82 engages the part 86 of the pen 13 which is directed downwardly below the level of the corresponding plate. In this way the plate is kept against lateral movement of the cams 82. The operation is as follows. When a supplied plate 12 is lifted by the cams 80, the cams 82 are pushed away by the cams 80 during the upward movement until the plate 12 is arriving at a height which is somewhat higher than the position which the plate must take ultimately in the Danish container. Subsequently the direction of movement of the lifting device is reversed and the cams 80 on which the plate 12 rests are moved downwardly until reaching the next cam 82 on which the cams 80 with the plate 12 will rest now. The cam is disengaged from the lifting device and the next plate 12 can now be brought into the right position.

In a modified embodiment of this device the cams can also be controlled separately whereby a cam 82 is moved in the track of the cam 80 at the moment that the plate has reached the desired position. This can for example be performed by means of a magnetic system whereby the cam is moved back and forth between a retracted position and an extended position.

Before the poles 9 with their openings 11 can be moved over the pens 13, is it generally preferred that the plates with their corresponding pens are sufficiently aligned. This step can be performed in different ways.

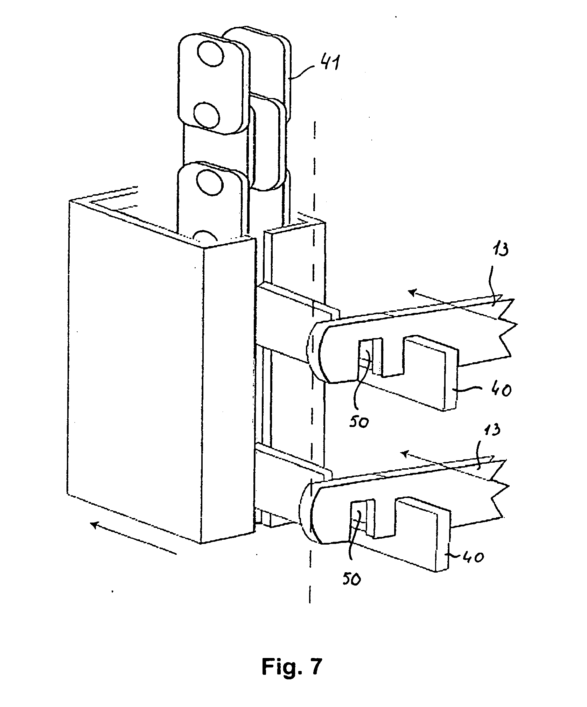

In the embodiment shown in figure 7 use is made of a system comprising chains 41 provided with hooks 40 on which the plates 12 rest through the pens 13. The hooks 40 have an upwardly directed recess 50 which as seen along the longitudinal direction of the hook has a dimension which harmonized with the thickness of the pen 13 and the margin left in the openings 11. In view of the freedom of movement of the chain the hooks 40 adapt themselves to the position of the pens 13. At the moment that all the plates are supported by the hooks 40, the chain can be placed as a whole in a fixed position with the consequence that all the pens 13 are positioned inside the dimensions of the openings 11. In this way all pens 13 are aligned sufficiently and it becomes possible to move one pole 9 in one movement with its openings 11 over the aligned pens.

In another embodiment the pens of the plates are supported by the flange plate of all the L-shaped cams and the pens can simply become aligned by means of a pressing rod which presses against the other flange plate of the L-shaped cams, whereby the cams will move and at the moment that the other flange plate of the L-shaped cams is reaching the pen, the pen is moved as well, whereby ultimately all the pens will become aligned.

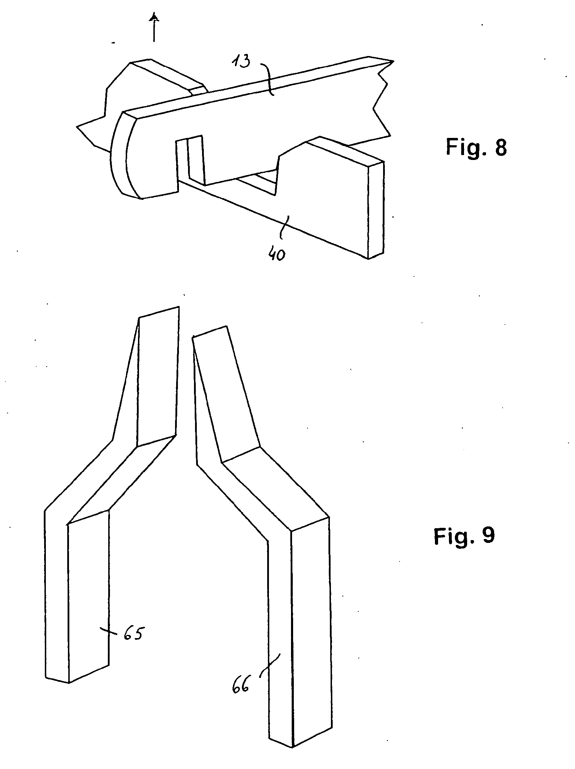

In the figures 8 and 9 there is shown a modified embodiment of a system for aligning the pens 13. In this embodiment there are provided two guiding elements 65 and 66 which form together a tapering guiding channel for the pens 13. When the four pens together with the plate 12 to which they belong are moved upwardly as one unit in order to occupy its correct position each pen is guided through a system of guiding elements 65 and 66, whereby the position of each pen 13 in horizontal direction parallel to the short side of the plate is defined accurately. In this position of each pen this pen can be gripped by a recess in a hook or cam 40 and by that being moved upwardly.

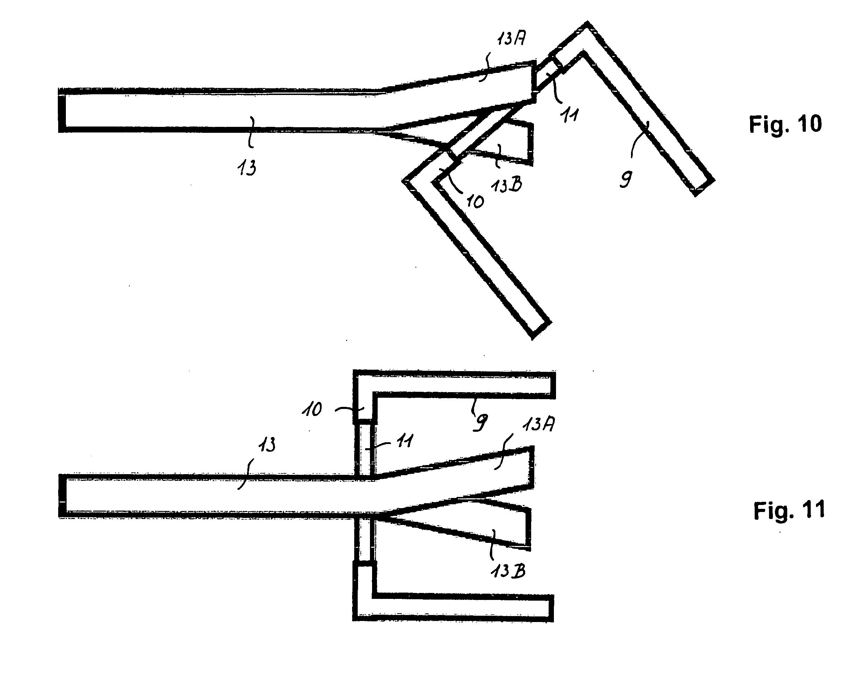

To assemble the poles with the pens 13 use can be made of the same type of device as used for the disassembling of the Danish container. In this device each pole is gripped by two clamping bars by means of which the movement of the poles can be controlled in an accurate way. It is possible in this case to move the pole straight over the pens, such as shown in figure 11, provided that the alignment of the pens is sufficient and the possible deformations of the pens are allowing this. Another process however is that the poles 9 are approaching the pens 13 under an angle. Here the pens 13 are located in one plane, but due to the deformations of the pens they are not exactly above each other such as schematically indicated with 13A and 13B. In the other direction, the longitudinal direction of the plates all pens are exactly located and positioned. By putting the pole 9 under an angle and to move it in the direction of the pens 13, which direction is parallel to the short side of the plates, all pens 13 will be moved in the openings 12 as shown in figure 10. In view of the fact that the pens 13, as seen along the direction in which the pole is approaching, are supported in a flexible way, the pens 13 will, dependent upon the moment that they come into contact with the edge of the corresponding opening 12, be taken until all the pens 13 make contact with the edge of their corresponding openings. On that moment the pole can be twisted to the straight position and all pens will be in the corresponding openings.

In the last phase of the assembling of the Danish container the unit comprising the plates 12 and the hooked on poles 9 must be assembled with the corresponding support 5, by introducing the lower ends of the poles in the openings 8 in the support 5.

In order to make the introduction of the lower ends of the poles 9 in the openings easier, use is made of guiding elements in the shape of funnels which guide the lower ends of the poles 9 in the openings 8. These funnel shape guides can be positioned temporarily above the openings 8 until the lower ends are introduced in the openings. For this purpose different embodiments of guides can be used.

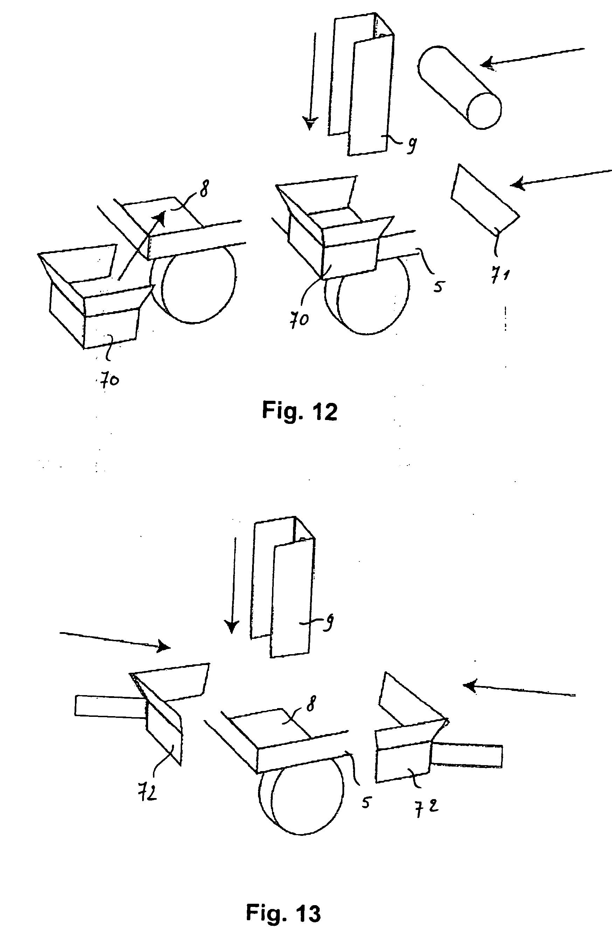

In the embodiment shown in figure 12 the guide 70 consists of a U-shaped profile which fits upon the opening 8 and of which one end has the shape of a truncated pyramid. The guiding 70 is made complete by means of a plate 71 put under an angle which in fact make the funnel complete. In this way an opening with a wider aperture has been made whereby the lower ends of the poles 9 can be easier introduced and guided downwardly. The positioning of the U-shaped profiles on the openings in the support is as such not a problem as the corners of the supports as such can be detected in a very accurate way so that the position where the guides must be placed can be accurately done. The simultaneous lowering of the four poles in the corresponding openings of the support is however a problem. The position of the poles is as such sufficiently defined as this position is defined by the clamping members between which the poles are held. The dimensions of the supports however are not sufficiently defined in order to identify beyond doubt the position of the four corners and to use this for the positioning of the poles opposite the openings in which they must be introduced. This problem is avoided by the funnel shape of the guides 70. By making the funnel shape guides in two pieces it becomes possible to remove the funnel shape guides after the poles have been positioned and introduced and to reuse the guides. In figure 13 there is shown an embodiment of the funnel shape guide in which it is composed of two L-shaped profiles 72 , each of which forming two side walls of the funnel. By using this two-fold construction it also becomes possible to remove the funnel shaped guides after the introduction of the poles and to reuse the same.
It will be obvious that the invention is not restricted to the embodiments described and illustrated, but according to the wording of the appended claims it is possible to apply modifications which are still part of the invention.

## Claims

1. A process for the treatment of a Danish container (21,28) comprising a support (6), poles (9) and plates (12), in which a Danish container charged with a first assortment of products is supplied to a treatment station (22,27), and a Danish container (28,21) charged with a second assortment of products is discharged from the treatment station, **characterized in that** in the treatment station in a first step the supplied Danish container is separated into a support (6) and a unit comprising the poles (9) and the plates (12) loaded with the first assortment of products, and **in that** in a second step the poles (9) are separated from the loaded plates (12), and these loaded plates (12) are stored in a storage buffer (24), **in that** from the storage buffer a number of plates (12) loaded with products corresponding to the second assortment are selected and are assembled into a Danish container which is subsequently removed from the treatment station.

2. A process according to claim 1, **characterized in that** the supports (6), poles (9) and plates (12) charged with a first assortment of products are each transported to their own storage buffer.

3. A process according to claim 2, **characterized in that** before the poles (9) are transported to the storage buffer, the extensions which might be present are remove and stored or discharged.

4. A process according to any of the preceding claims, **characterized in that** in order to assemble a Danish container with plates (12) charged with the second assortment of products, the plates (12) and a support (6) charged with products in accordance with the desired assortment are selected, said plates having pens (13), the so charged plates (12) are positioned above each other at the right height and **in that** poles (9) with their openings are moved over the pens (13) of the so positioned plates (12), whereby the poles (9) with the right openings (11) are moved over the pens (13) and the so formed unit is assembled with the selected support (6), the poles (9) being received by the openings (8) in the support.

5. A process according to claim 4, **characterized in that** before assembling the plates (6) and the poles (9) the required extensions are provided on the poles (9).

6. A process according to any one of the preceding claims, **characterized in that** before the disassembling of a supplied Danish container, all plates (12) are supported by means of a system of hooks or cams and the unit comprising the plates (12) and the poles (9) is moved perpendicular with respect to the support (6).

7. A process according to claim 6, **characterized in that** the support (6) is withheld during the movement of the unit.

8. A process according to 7, **characterized in that** the support (6) is removed with a shock from the unit comprising the poles (9) and the plates (12) charged with the first assortment of products.

9. A process according to any one of the preceding claims, in which a Danish container is assembled with plates (12) charged with a second assortment of products, and the poles (9), plates (12) and a support (6) are supplied from a storage, **characterized in that** said plates having pens (13), furthermore the plates (12) are positioned in the right sequence at the right height, in this position of the plates (12), the poles (9) with their openings are moved over the pens (13) of the plates (12) and the unit comprising the plates (12) and the poles (9) are inserted in the openings (8) of the corresponding support (6).

10. A process according to claim 9, **characterized in that** the pens (13) of the plates (12) are aligned before the poles (9) are moved over the pens (13).

11. A process according to claim 10, that the aligning of the pens (13) takes place each time at one side of the plates (12).

12. A process according to any of the claims 9 to 11, **characterized in that** above the openings (8) in the support (6) funnel shaped auxiliary members (70) are provided in order to introduce the poles (9) in the openings (8).

13. A system for performing the process according to any one of the preceding claims, especially for the vertical displacement of the unit comprising the poles (9) and the plates (12) charged with a first assortment of products with respect to a support (6) in a Danish container, said plates having pens (13), which system comprises a number of hooks or cams (40) in which each time four of these hooks or cams (40) can be placed under each of the present plates in the neighborhood of the pens (13) thereof, **characterized in that that** the hooks or cams (40) are connected to a driving system (41) which can move all hooks or cams (40) per corner.

14. A system according to claim 13, **characterized in that** the system comprises a number of hooks or cams (40) corresponding to the maximum possible number of plates (12) in a Danish container, the hooks or cams (40) in the system having as seen in the height a fixed position with respect to each other.

15. A system according to claim 14, **characterized in that** the hooks or cams (40) are movable between two positions, a rest position in which they cannot be in touch with a plate of a Danish container to be disassembled, and an active position in which they extend under one of the plates of a Danish container to be disassembled.

16. A system according to claim 15, **characterized in that** detection means are provided for defining the position of the charged plates in a Danish container to be disassembled, and means for activating of the corresponding hooks or cams (40) in the system.

17. A system according to claim 13, **characterized in that** means are provided for detecting the position of each plate in a Danish container to be disassembled, and **in that** in the system for each pen (13) of a detected plate (12) a hook or cam is brought in a position for moving the unit comprising the plates and the poles.

## Patentansprüche

1. Verfahren zur Behandlung eines dänischen Behälters (21, 28), umfassend eine Stütze (6), Stangen (9) und Platten (12), wobei ein dänischer Behälter, der mit einem ersten Produktsortiment beladen ist, einer Behandlungsstation (22, 27) zugeführt wird, und ein dänischer Behälter (28, 21), der mit einem zweiten Produktsortiment beladen ist, von der Behandlungsstation entfernt wird,
**dadurch gekennzeichnet, dass** in der Behandlungsstation in einem ersten Schritt der zugeführte dänische Behälter in eine Stütze (6) und eine Einheit, die die Stangen (9) und die mit dem ersten Produktsortiment beladenen Platten (12) umfasst, getrennt wird, und dadurch, dass die Stangen (9) in einem zweiten Schritt von den beladenen Platten (12) getrennt werden und diese beladenen Platten (12) in einem Zwischenspeicher (24) gelagert werden, und dadurch, dass aus dem Zwischenspeicher eine Anzahl von Platten (12), die mit dem zweiten Sortiment entsprechenden Produkten beladen sind, ausgewählt werden und zu einem dänischen Behälter zusammengebaut werden, der danach von der Behandlungsstation entfernt wird.

2. Verfahren nach Anspruch 1, **dadurch gekennzeichnet, dass** die Stütze (6), Stangen (9) und Platten (12), die mit einem ersten Produktsortiment beladen sind, jede an ihren eigenen Zwischenspeicher befördert werden.

3. Verfahren nach Anspruch 2, **dadurch gekennzeichnet, dass** vor dem Transport der Stangen (9) zu dem Zwischenspeicher die möglicherweise vorhandenen Verlängerungen entfernt und aufbewahrt oder entsorgt werden.

4. Verfahren nach einem der vorstehenden Ansprüche, **dadurch gekennzeichnet, dass** für den Zusammenbau des dänischen Behälters mit Platten (12), die mit dem zweiten Produktsortiment beladen sind, die Platten (12) und eine mit Produkten beladene Stütze (6) in Übereinstimmung mit dem gewünschten Sortiment ausgewählt werden, die Platten Stifte (13) aufweisen, die auf diese Weise beladenen Platten (12) übereinander auf der richtigen Höhe angeordnet werden, und dadurch, dass die Stangen (9) mit ihren Öffnungen über die Stifte (13) der auf diese Weise angeordneten Platten (12) bewegt werden, wodurch die Stangen (9) mit den entsprechenden Öffnungen (11) über die Stifte (13) bewegt werden und die auf diese Weise gebildete Einheit mit der ausgewählten Stütze (6) zusammengebaut wird, wobei die Stangen (9) von den Öffnungen (8) in der Stütze aufgenommen werden.

5. Verfahren nach Anspruch 4, **dadurch gekennzeichnet, dass** die erforderlichen Verlängerungen vor dem Zusammenbau der Platten (6) und der Stangen (9) auf den Stangen (9) bereitgestellt werden.

6. Verfahren nach einem der vorstehenden Ansprüche, **dadurch gekennzeichnet, dass** alle Platten (12) vor dem Auseinanderbau eines zugeführten dänischen Behälters mittels eines Haken- oder Nockensystems gestützt werden und die Einheit, die die Platten (12) und die Stangen (9) umfasst, in Bezug auf die Stütze (6) senkrecht bewegt wird.

7. Verfahren nach Anspruch 6, **dadurch gekennzeichnet, dass** die Stütze (6) während der Bewegung der Einheit zurückgehalten wird.

8. Verfahren nach Anspruch 7, **dadurch gekennzeichnet, dass** die Stütze (6) von der Einheit, die die Stangen (9) und die mit dem ersten Produktsortiment beladenen Platten (12) umfasst, mit einem Stoß entfernt wird.

9. Verfahren nach einem der vorstehenden Ansprüche, wobei ein dänischer Behälter mit Platten (12) zusammengebaut wird, die mit einem zweiten Produktsortiment beladen sind, und die Stangen (9), Platten (12) und eine Stütze (6) von einem Aufbewahrungsort zugeführt werden, **dadurch gekennzeichnet, dass** die Platten Stifte (13) aufweisen, darüber hinaus die Platten (12) in der richtigen Reihenfolge auf der richtigen Höhe angeordnet werden, die Stangen (9) in dieser Position der Platten (12) mit ihren Öffnungen über die Stifte (13) der Platten (12) bewegt werden und die Einheit, die die Platten (12) und die Stangen (9) umfasst, in die Öffnungen (8) der zugehörigen Stütze (6) eingeführt wird.

10. Verfahren nach Anspruch 9, **dadurch gekennzeichnet, dass** die Stifte (13) der Platten (12) ausgerichtet werden, bevor die Stangen (9) über die Stifte (13) bewegt werden.

11. Verfahren nach Anspruch 10, **dadurch gekennzeichnet, dass** die Ausrichtung der Stifte (13) jeweils auf einer Seite der Platten (12) erfolgt.

12. Verfahren nach einem der Ansprüche 9 bis 11, **dadurch gekennzeichnet, dass** über den Öffnungen (8) in der Stütze (6) trichterförmige Hilfselemente (70) bereitgestellt werden, um die Stangen (9) in die Öffnungen (8) einzuführen.

13. System zur Ausführung des Verfahrens nach einem der vorstehenden Ansprüche, insbesondere für die vertikale Bewegung der Einheit, die die Stangen (9) und die mit einem ersten Produktsortiment beladenen Platten (12) umfasst, in Bezug auf einen Stütze (6) in einem dänischen Behälter, wobei die Platten Stifte (13) aufweisen, wobei das System eine Anzahl von Haken oder Nocken (40) umfasst, wobei jeweils vier dieser Haken oder Nocken (40) unter jede der vorhandenen Platten in der Nähe der Stifte (13) davon angeordnet werden können,
**dadurch gekennzeichnet, dass** die Haken oder Nocken (40) mit einem Antriebssystem (41) verbunden sind, das alle Haken oder Nocken (40) pro Ecke bewegen kann.

14. System nach Anspruch 13, **dadurch gekennzeichnet, dass** das System eine Anzahl von Haken oder Nocken (40) umfasst, die der maximalen Anzahl von Platten (12) in einem dänischen Behälter entsprechen, wobei die Haken oder Nocken (40) in dem System im Hinblick auf die Höhe eine feste Position zueinander haben.

15. System nach Anspruch 14, **dadurch gekennzeichnet, dass** die Haken oder Nocken (40) zwischen zwei Positionen bewegt werden können, nämlich einer Ruheposition, in der sie nicht mit einer Platte eines dänischen Behälters, der auseinander gebaut werden soll, in Kontakt stehen können, und einer aktiven Position, in der sie unter einer der Platten eines dänischen Behälters, der auseinandergebaut werden soll, verlaufen.

16. System nach Anspruch 15, **dadurch gekennzeichnet, dass** Erkennungsmittel zum Bestimmen der Position der beladenen Platten in einem dänischen Behälter, der auseinander gebaut werden soll, und Mittel zum Aktivieren der entsprechenden Haken oder Nocken (40) in dem System bereitgestellt sind.

17. System nach Anspruch 13, **dadurch gekennzeichnet, dass** Mittel zum Erkennen der Position jeder Platte in einem dänischen Behälter, der auseinander gebaut werden soll, bereitgestellt sind, und dadurch, dass in dem System für jeden Stift (13) einer erkannten Platte (12) ein Haken oder eine Nocke in eine Position gebracht wird, um die Einheit zu bewegen, die die Platten und die Stangen umfasst.

## Revendications

1. Procédé pour le traitement d'un conteneur danois (21, 28) comprenant un support (6), des tringles (9) et des plaques (12), dans lequel un conteneur danois chargé avec un premier assortiment de produit est fourni à une station de traitement (22, 27) et un conteneur danois (28, 21) chargé avec un deuxième assortiment de produits est déchargé de la station de traitement, **caractérisé en ce que** dans la station de traitement, lors d'une première étape, le conteneur danois est séparé en un support (6) et une unité comprenant les tringles (9) et les plaques (12) chargées avec le premier assortiment de produits et **en ce que**, lors d'une deuxième étape, les tringles (9) sont séparées des plaques chargées (12) et ces plaques chargées (12) sont stockées dans un tampon de stockage (24), **en ce qu**'à partir du tampon de stockage, un nombre de plaques (12) chargées avec des produits correspondant au deuxième assortiment est choisi et assemblé dans le conteneur danois qui est postérieurement retiré de la station de traitement.

2. Procédé conformément à la revendication 1, **caractérisé en ce que** les supports (6), les tringles (9) et les plaques (12) chargées avec un premier assortiment de produits sont transportés à leur propre tampon de stockage.

3. Procédé conformément à la revendication 2, **caractérisé en ce qu'**avant que les tringles (9) soient transportées au tampon de stockage, il est nécessaire de retirer, de stocker ou de décharger les extensions pouvant être présentes.

4. Procédé conformément à l'une quelconque des revendications précédentes, **caractérisé en ce qu'**afin d'assembler un conteneur danois avec des plaques (12) chargées avec le deuxième assortiment de produits, sont choisies les plaques (12) et un support (6) chargé avec des produits, en fonction de l'assortiment souhaité, lesdites plaques ayant des guides (13), les plaques ainsi chargées (12) étant situées les unes sur les autres à la hauteur correspondante et **en ce que** les tringles (9) sont déplacées en situant leurs ouvertures sur les guides (13) des plaques ainsi situées (12) où les tringles (9) sont déplacées sur les guides (13) à l'aide des ouvertures correspondantes (11) et l'unité ainsi formée est assemblée avec le support choisi (6), les tringles (9) étant insérées dans les ouvertures (8) du support.

5. Procédé conformément à la revendication 4, **caractérisé en ce que** préalablement à l'assemblage des plaques (6) et des tringles (9) les extensions nécessaires sont fournies dans les tringles (9).

6. Procédé conformément à l'une quelconque des revendications précédentes, **caractérisé en ce que** préalablement au désassemblage d'un conteneur danois fourni, toutes les plaques (12) sont supportées par un système de crochets ou de cames et l'unité comprenant les plaques (12) et les tringles (9) est déplacée de façon perpendiculaire au support (6).

7. Procédé conformément à la revendication 6, **caractérisé en ce que** le support (6) est retenu pendant le mouvement de l'unité.

8. Procédé conformément à la revendication 7, **caractérisé en ce que** le support (6) est retiré avec un choc de l'unité comprenant les tringles (9) et les plaques (12) chargées avec le premier assortiment de produits.

9. Procédé conformément à l'une quelconque des revendications précédentes, dans lequel un conteneur danois est assemblé avec des plaques (12) chargées avec un deuxième assortiment de produits, et les tringles (9), les plaques (12) et un support (6) sont fournis à partir d'un stockage, **caractérisé en ce que** lesdites plaques présentent des guides (13). Par ailleurs, les plaques (12) sont situées dans la séquence correspondante à la hauteur correspondante, dans cette position des plaques (12), les tringles (9) sont déplacées sur les guides (13) des plaques (12) à l'aide de leurs ouvertures et l'unité comprenant les plaques (12) et les tringles (9) est insérée dans les ouvertures (8) du support correspondant (6).

10. Procédé conformément à la revendication 9, **caractérisé en ce que** les guides (13) des plaques (12) sont alignées avant que les tringles (9) soient déplacées sur les guides (13).

11. Procédé conformément à la revendication 10, **caractérisé en ce que** l'alignement des guides (13) se produit à chaque fois d'un côté des plaques (12).

12. Procédé conformément à l'une quelconque des revendications 9 à 11, **caractérisé en ce que** sur les ouvertures (8) dans le support (6) sont fournis des membres auxiliaires en forme d'entonnoir afin d'introduire les tringles (9) dans les ouvertures (8).

13. Système pour la réalisation d'un procédé conformément à l'une quelconque des revendications précédentes, en particulier, pour le déplacement vertical de l'unité comprenant les tringles (9) et les plaques (12) chargées avec un premier assortiment de produits par rapport à un support (6) dans un conteneur danois, lesdites plaques ayant des guides (13), système comprenant un nombre de crochets ou de cames (40) dans lequel, à chaque fois, quatre crochets ou cames (40) peuvent être situés sous chacune des plaques près de leurs guides (13), **caractérisé en ce que** les crochets ou les cames (40) sont connectés à un système d'entraînement (41) qui peut déplacer tous les crochets et les cames (40) par angle.

14. Système conformément à la revendication 13, **caractérisé en ce que** le système comprend un nombre de crochets ou de cames (40) correspondant au nombre maximum possible de plaques (12) dans un conteneur danois, où les crochets ou les cames (40) dans le système présentent, tel qu'indiqué, une position fixe les uns par rapport aux autres.

15. Système conformément à la revendication 14, **caractérisé en ce que** les crochets ou les cames (40) peuvent être déplacés entre deux positions, une position de repos dans laquelle ils ne peuvent pas être en contact avec une plaque d'un conteneur danois pour être désassemblés et une position active dans laquelle ils s'étendent sous l'une des plaques d'un conteneur danois à désassembler.

16. Système conformément à la revendication 15, **caractérisé en ce que** des moyens de détection sont fournis pour définir la position des plaques chargées dans un conteneur danois à désassembler, de même que des moyens pour activer les crochets ou les cames correspondants (40) dans le système.

17. Système conformément à la revendication 13, **caractérisé en ce que** des moyens sont fournis pour détecter la position de chacune des plaques dans un conteneur danois à désassembler, et **en ce qu'**un système pour chaque guide (13) d'un plaque détectée (12) et un crochet ou une came sont conduits dans une position déterminée pour le déplacement de l'unité comprenant les plaques et les tringles.
